Europäisches Patentamt

European Patent Office

Office européen des brevets

(11) Numéro de publication : **0 511 896 A1**

(12) **DEMANDE DE BREVET EUROPEEN**

(21) Numéro de dépôt : **92401114.1**

(22) Date de dépôt : **21.04.92**

(51) Int. Cl.$^5$ : **H04N 3/15, H04N 5/33**

(30) Priorité : **30.04.91 FR 9105293**

(43) Date de publication de la demande :
**04.11.92 Bulletin 92/45**

(84) Etats contractants désignés :
**DE FR GB IT NL SE**

(71) Demandeur : **THOMSON-TRT DEFENSE**
**Rue Guynemer**
**F-78280 Guyancourt (FR)**

(72) Inventeur : **Fouilloy, Jean-Pierre**
**THOMSON-CSF, SCPI, Cédex 67**
**F-92045 Paris la Défense (FR)**
Inventeur : **Marche, Pierre**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé de formation d'image infrarouge de haute résolution, et caméra thermique à balayage monodirectionnel destiné à sa mise en oeuvre.**

(57)     L'invention concerne une caméra thermique à balayage monodirectionnel et un procédé d'échantillonnage de signal pour une telle caméra.

La caméra thermique selon l'invention comporte un système optique afocal d'entrée (1), un miroir de balayage (2) pour faire défiler ligne par linge une image de la scène, cette image étant projetée par un objectif (3) sur un détecteur (4). Le pas d'échantillonnage du détecteur (4) a une valeur comprise entre la moitié et les trois quarts de la valeur du côté moyen des surfaces détectrices élémentaires du détecteur (4) organisées en ligne. Une mémoire de lignes (11) est montée avant le circuit de traitement vidéo (9) afin d'utiliser une longueur de ligne adaptée au décalage angulaire provoquée par les vibrations selon la direction horizontale et repérée par un gyroscope (13).

Application à la formation d'images de haute résolution dans l'infrarouge.

FIG. 4

EP 0 511 896 A1

L'invention concerne le domaine de la formation d'images dans une bande spectrale infrarouge et, plus particulièrement, un procédé de formation d'image de haute résolution dans l'infrarouge et une caméra thermique à balayage monodirectionnel de mise en oeuvre.

L'évolution des performances des caméras thermiques dans les fenêtres de transmission atmosphériques 3-5 et 8-12 μm suit notamment celle des détecteurs équipant les caméras thermiques. Les détecteurs de première génération sont constitués d'un ensemble de zones élémentaires photoconductrices ou photovoltaïques très inférieur au nombre de pixels de l'image de la scène à observer et focalisée sur le détecteur : par exemple, quelques unités à quelques dizaines de zones élémentaires contre, typiquement, 250 000 pixels, Cette limitation résulte du nombre maximum de connexions possibles du fait des contraintes technologiques existant dans un cryostat, ces détecteurs ne fonctionnant qu'à basse température (typiquement 77°K). L'analyse complète de l'image est, dans ces conditions, effectuée grâce à des systèmes opto-mécaniques de balayage bidimensionnel. Le passage d'une direction de balayage à l'autre doit être effectué très rapidement ; d'autre part, le traitement du signal est complexe puisque devant absorber les informations au rythme de l'analyse et les restituer au rythme du standard TV utilisé ; de plus leur sensibilité, fonction de la racine carrée du nombre de zones détectrices élémentaires, est limitée par le nombre très restreint de ces zones.

Les détecteurs de deuxième génération utilisent une mosaïque de zones détectrices dont le nombre est considérablement augmenté grâce à l'application d'une technologie de couplage entre la mosaïque de détection et des circuits de transfert de charges (DTC) situé approximativement dans le plan de focalisation du cryostat, dit "plan froid". Les zones détectrices élémentaires sont constituées d'électrodes photoconductrices ou, dans les versions actuelles photovoltaïques (en particulier constitué par un matériau ternaire Hg/Cd/Te) et sont disposées dans un substrat semi-conducteur. Dans cette catégorie, se retrouvent :
- les détecteurs pseudo-linéaires :

ces détecteurs, formés d'un petit nombre de lignes, quelques lignes au plus, de zones détectrices définissant une direction horizontale, occupent toute la largeur d'une image de la scène observée, mais possèdent une hauteur très inférieure à celle de cette image ; un système de balayage, par exemple à miroir plan oscillant, entraîne cette image ligne par ligne selon une direction verticale perpendiculaire à la largeur de l'image, et un circuit de traitement de signal permet de constituer chaque ligne d'une image vidéo à partir d'une série de signaux fournis par les zones détectrices et correspondant à une même ligne de la scène observée successivement balayée, De tels détecteurs sont décrits, par exemple, dans les brevets GB 2 152 328 ou FR 2 599 920, ce dernier déposé au nom de la Société T. R. T. (Télécommunications Radioélectriques et Téléphoniques) ;
- les détecteurs bidimensionnels :

soit de petite dimension (64 x 64 ou 128 x 128 zones détectrices), ces détecteurs couvrant directement l'image à analyser,

soit de grande dimension (512 x 512 zones détectrices) ; ces détecteurs couvrent également l'image à analyser et le nombre de zones détectrices est généralement égal au nombre de pixels de l'image. Du fait de l'existence d'espaces entre les zones, ils necessitent cependant un système de microbalayage associé, de faible débattement mais rapide, et une mémoire d'image pour assurer une continuité de détection sur toute la surface du détecteur (typiquement, le microbalayage provoque le décalage de l'image d'un demi-pas dans deux directions).

Avec les détecteurs bidimensionnels, le débit d'information entre détecteur et mémoire atteint des valeurs considérables surtout s'ils sont associés à un microbalayage et, d'autre part, ces détecteurs nécessitent l'utilisation d'un dispositif d'uniformisation de la sensibilité des différentes zones photodétectrices par compensations additive et mutiplicative. Ces compensations dépendent en partie de facteurs extérieurs (différence de température entre la scène observée et le détecteur) alors que les coefficients additifs ou multiplicatifs de compensation doivent être acquis en temps réel ou quasi-réel. Des procédés complexes permettent d'acquérir ces coefficients (volet à température uniforme, corps noir, circuit de soustraction des non-uniformités constantes mémorisées...).

L'invention vise à obtenir une image vidéo de haute résolution géométrique à l'aide d'une caméra thermique qui soit à la fois de conception simple, de coût modéré et de performances élevées, ce qui est jusqu'à présent impossible à concilier dans les différents types d'équipement précités.

Pour atteindre ces objectifs, l'amélioration de la résolution de l'image selon l'invention est obtenu par une réduction de la dimension des zones détectrices élémentaires d'un détecteur de type pseudo-linéaire et par l'utilisation d'une fréquence d'échantillonnage du signal inférieure au double de la fréquence maximale du signal échantillonné.

La loi d'échantillonnage de Shannon, n'est alors plus respectée dans le cadre de l'invention. Cette contradiction apparente sera levée plus loin en considérant les Fonctions de Transferts de Modulation (FTM) des différents éléments intervenant dans la chaîne optronique de formation d'images.

Plus précisément, l'invention propose un procédé de formation d'image infrarouge de haute résolution à l'aide d'une caméra thermique suivant lequel une image de la scène observée est formée sur un détecteur infrarouge de type pseudo-linéaire composé de zones détectrices élémentaires, et est balayée pour fournir un signal d'information d'image à partir des signaux provenant des zones détectrices élémentaires à une fréquence d'échantillonnage Fe, le détecteur ayant une Fonction de Transfert de Modulation (FTM) à fréquence de coupure $F_C$, le procédé étant caractérisé en ce que la fréquence d'échantillonnage Fe est une fréquence inférieure au double de la fréquence de coupure $F_C$ et supérieure au double d'une fréquence de coupure seuil $F_{Co}$.

L'invention concerne également une caméra thermique à balayage monodirectionnel mettant en oeuvre un tel procédé.

L'invention sera mieux comprise et d'autres caractéristiques et avantages apparaîtront à la lecture de la description qui suit, faite en référence aux figures annexées qui représentent respectivement :

- la figure 1, un exemple de réalisation d'une caméra thermique à balayage monodirectionnel,
- la figure 2, les courbes de FTM du détecteur et des autres éléments d'une chaîne optronique de visualisation comportant une caméra thermique,
- la figure 3, un ensemble de courbes de MRTd pour des zones de détection élémentaire de différentes dimensions,
- la figure 4, un exemple de réalisation d'une mosaïque de détection de la caméra thermique selon l'invention,

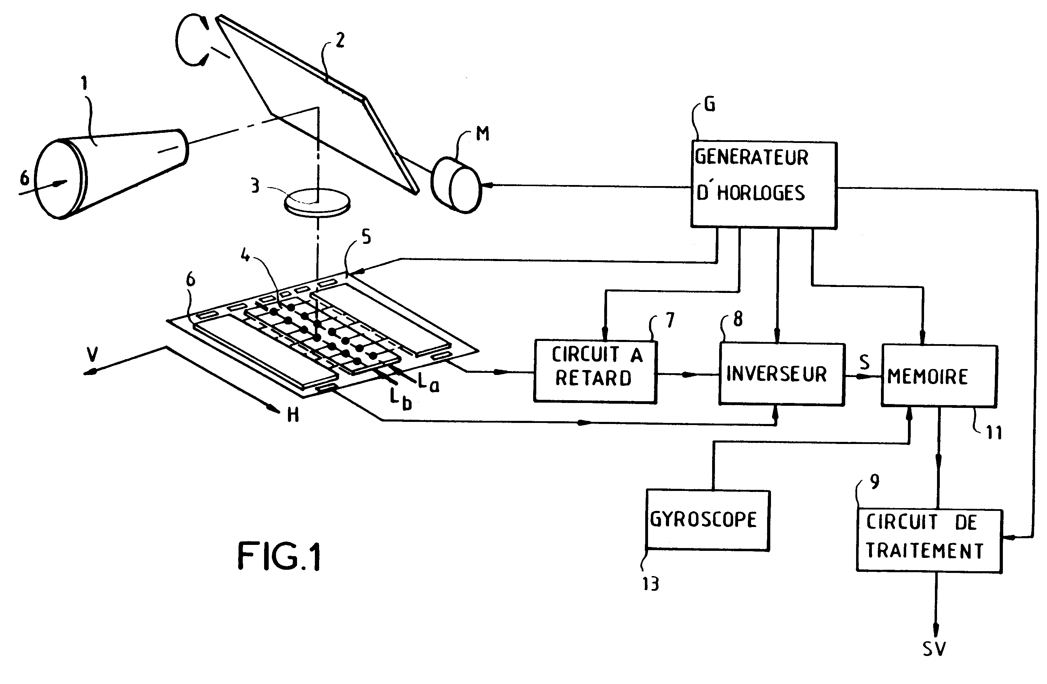

Selon un exemple de réalisation schématisé sur la figure 1, une caméra thermique à balayage monodirectionnel comporte classiquement un système optique afocal d'entrée 1, un miroir de balayage 2, un objectif à grande ouverture 1, un détecteur 4 du type pseudo-linéaire, des circuits de transfert 5 et 6, un circuit à retard 7, un inverseur 8, un circuit de traitement de signal 9 et un générateur d'horloges G. Un faisceau de lumière utile 6 provenant d'une scène à observer est réfléchi, après collimation à travers l'optique afocale 1, par le miroir 2 et est projeté sur le détecteur infrarouge 4 en traversant l'objectif 3 pour former une image de la scène observée sur le détecteur 4 disposé dans le "plan froid" d'un refroidisseur à cycle de stirling ou à détente joule-Thomson (non représenté). Le miroir 2, entraîné par exemple par un moteur couple M, fait défiler les lignes de l'image projetée sur le détecteur 4 selon une direction verticale V. Le détecteur pseudo-linéaire 4 comporte un substrat semi-conducteur associé à des circuits de transfert de signal 5 et 6, soit de transfert de charges, soit de transfert de tensions, Les circuits de transfert de charges sont du type appelés classiquement CCD (initiales de "Charge Coupled Device", c'est-à-dire dispositif à couplage de charges en terminologie anglo-saxonne) ; les circuits à transfert de tensions sont élaborés à partir de la technologie type CMOS (initiales de Complementary Symmetry Metal Oxide semiconductor, signifiant Semiconducteur Métal-Oxyde à Symétrie Complémentaire).

Dans le substrat sont découpées des zones élémentaires de détection organisées en lignes telles que La et Lb. La direction commune de ces lignes définit une direction horizontale H perpendiculaire à la direction verticale V de balayage. Les charges libérées par les zones détectrices, en proportion de l'intensité du flux lumineux incident, sont stockées, puis multiplexées et lues grâce aux circuits à transfert. Chaque circuit de transfert, tel que 5 ou 6, fournit un signal sous la forme d'une tension de sortie, après conversion charges/tension dans le cas de circuits à transfert de charges.

Une même ligne de l'image formée sur le détecteur étant vue successivement par les lignes de zones détectrices, il convient de resynchroniser le signal en sortie du circuit de transfert 5 par rapport à celui délivré par le circuit 6 et avant leur multiplexage. Ce retard est engendré, par exemple dans le plan froid, par un circuit à retard 7, du type entrant dans la constitution de circuits TDI ("initiales de Time Delay and Integration", soit "à Temps d'Intégration Différé" en terminologie anglo-saxonne ).

Les signaux en sortie des circuits transfert 5 et 6, soit directement soit par l'intermédiaire du circuit à retard 7, sont multiplexés par recombinaison alternative dans un inverseur 8. En sortie de l'inverseur 8, un signal S est appliqué au circuit de traitement 9 pour fournir un signal vidéo SV au standard désiré, par exemple celui de la TV numérique. Un générateur d'horloges G pilote en fréquences les commandes du moteur M, les circuits de transfert 5 et 6, le circuit à retard 7 et le circuit de traitement 9, en fonction de la fréquence d'échantillonnage du standard vidéo.

Afin d'obtenir une image de haute résolution à l'aide d'une caméra thermique du type ci-dessus décrite, l'invention agit au niveau de la compensation des effets vibrationnels provoqués par le miroir 2 et au niveau de l'organisation spatiale des zones de détection élémentaire du détecteur 4.

Le moteur M d'entraînement du miroir 2 a une commande asservie à une valeur de consigne fournie par le générateur G qui suit une rampe linéaire du type en "dents de scie". A cette rampe peut être superposée une tension extérieure pour compenser les vibrations angulaires résiduelles selon la direction de balayage verticale. Pour compenser les vibrations angulaires selon la direction horizontale, une mémoire 11 de faible capacité est insérée entre l'inverseur 8 et le circuit de traitement 9. Des informations fournies par un gyroscope 13, relatives aux variations de la ligne de visée du fait des vibrations, sont introduites dans la mémoire 11 sous la forme d'un signal correctif de décalage angulaire, Le signal se traduit par une variation compensatrice de la longueur des lignes, c'est-à-dire par un nombre adapté de zones détectrices élémentaires à prendre en compte. Par exemple, pour une visualisation numérique à 702 échantillons d'entrée, une mémoire du type FI-FO (initiales de "First-In First-Out", c'est-à-dire "registre à décalage" en terminologie anglosaxonne), programmée en longueur de chaque ligne pour ± 10 % du champ, ne nécessite la mémorisation que de 2 x 0,1 x 702 = 140 échantillons.

La dimension des zones détectrices élémentaires, typiquement de forme carrée de côté c, détermine la résolution angulaire de la caméra. Dans les détecteurs de première génération, les zones détectrices élémentaires avaient une surface de l'ordre de celle de la tache de diffraction dans l'infrarouge, c'est-à-dire un carré de l'ordre de 25 à 50 $\mu$m de côté, de façon à pouvoir récupérer le maximum de lumière mais au détriment de la résolution. Or, comme dans le cas de la diffraction d'une source étendue, le pouvoir de résolution augmente lorsque la dimension des zones de détection élémentaires diminue au-delà de la dimension de la tache de diffraction.

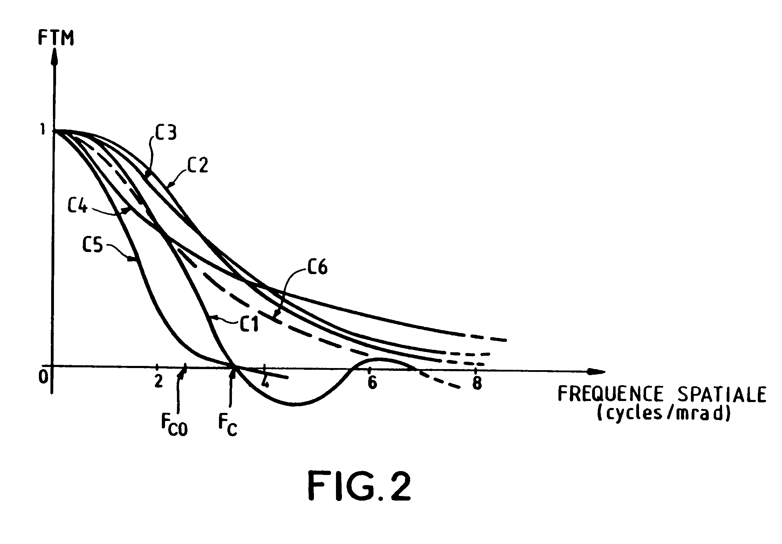

Un tel résultat est mis en évidence par l'étude de la Fonction de Transfert de Modulation (FTM) du détecteur, représentée sur la figure 2 par la courbe C1, en fonction de la fréquence spatiale d'une mire de référence. La mesure de FTM est obtenue en projetant des mires de différentes fréquences spatiales sur le détecteur et en mesurant les modulations du signal vidéo. La FTM du détecteur est une fonction de la forme sin x /x car elle représente, dans l'espace des fréquences, la transformée de Fourier de l'enveloppe des fonctions du type "porte" du signal fourni. La fréquence spatiale de coupure des zones détectrices étant égal à 1/c, le premier zéro de la FTM du détecteur est égal à 1/c. L'hypothèse communément retenue étant qu'aucune information n'est contenue dans les lobes secondaires de la fonction sin x/x, la fréquence maximale du spectre du signal échantillonné et la fréquence de coupure $F_C$ de la fonction de transfert coïncident avec le premier zéro égal à 1/c de la FTM.

Lorsque le côté des zones détectrices c diminue, $F_C$ se déplace vers des valeurs plus élevées, traduisant une amélioration de la résolution géométrique, De plus la diminution de c entraîne une réduction de la longueur totale du détecteur qui entraînent une diminution de la puissance de refroidissement nécessaire et une diminution de l'encombrement des optiques (optique d'entrée et objectif) et du miroir de balayage.

Un bon compromis technologique actuellement utilisé, compatible avec des refroidisseurs à cycle de Stirling du type "microcooler" (micro-refroidisseur en terminologie anglosaxonne), est un détecteur de largeur globale égale à environ 6 à 7 mm ce qui, pour les 702 échantillons de la télévision numérique, correspond à un pas d'échantillonnage de 9 $\mu$m, tout à fait réalisable, et à des zones de détection de 18 $\mu$m de

côté.

Or, la technologie actuelle permet par ailleurs de réaliser des carrés de zones de détection de côté c = 15 $\mu$m de côté. Mais l'utilisation de zones de détection de cette dimension qui permettent d'améliorer la résolution géométrique, n'a pas été mis en oeuvre jusqu'à présent car elle nécessiterait un pas d'échantillonnage de c/2 = 7,5 $\mu$m pour respecter la condition d'échantillonnage, Or des circuits à transfert de charges compatibles avec un tel pas d'échantillonnage n'existent pas.

La solution proposée permet de s'affranchir de ces contraintes et d'obtenir l'amélioration de résolution géométrique en mettant en oeuvre des zones détectrices élémentaires de côté aussi petit que possible, 15 $\mu$m avec la technologie actuelle, mais avec un pas d'échantillonnage supérieur à la valeur limite normalement définie par la condition d'échantillonnage et cependant compatible avec l'application envisagée, c'est-à-dire avec l'obtention de 702 échantillons par ligne (TV numérique), d'une fréquence de sortie de 13,5 MHz, d'une longueur de détecteur d'émission de 6 à 7 mm, et des zones détectrices de 15 $\mu$m de côté.

L'étude des Fonctions de Transfert de Modulation (FTM) de tous les éléments intervenant dans une chaîne optronique de visualisation d'image, et comprenant une caméra thermique, permet de comprendre dans quelle mesure la condition d'échantillonnage peut ne pas être respectée. Sur la figure 2, ont été représentées, outre la FTM du détecteur (courbe Cl), la FTM de l'optique de la caméra (C2), celle du moniteur de contrôle (C3), celle de l'oeil de l'observateur (C4) et la FTM globale (C5) qui résulte, par exemple, du produit de la FTM du détecteur (C1) et de celle de tous les autres éléments (C6). Le premier zéro de la FTM du détecteur, qui représente la plus faible de toutes les fréquences de coupure, conditionne la valeur de la fréquence de coupure globale de toute la chaîne.

L'invention utilise une fréquence d'échantillonnage spatial inférieur au double de la fréquence de coupure $F_C$ de la FTM du détecteur, c'est-à-dire égale au double d'une fréquence de coupure pratique située dans un intervalle $F_{Co}$-$F_C$. Dans ces conditions, la FTM globale conserve une valeur proche de zéro du fait de la position de sa courbe représentative. Cette faible valeur de la FTM globale, en particulier pour une fréquence de coupure égale à $F_{Co}$ peut se traduire en termes de valeurs de MRTd (initiales de "Minimum Resolvable Temperature difference", c'est-à-dire de différence de température minimum résolvable en terminologie anglosaxonne), indiquant la différence de températures détectable entre deux points de mires de différentes fréquences spatiales, Or, de faibles valeurs de FTM correspondent à des valeurs élevées de MRTd, ces deux grandeurs variant en sens inverse l'une de l'autre, Les valeurs de MRTd supérieures à quelques degrés, par exemple 5°, sont nettement supérieures aux valeurs d'intervalles de température habituellement rencontrées dans les scènes observées, La fréquence seuil pratique $F_{Co}$ peut être fixée de telle sorte que la MRTd soit de quelques degrés celsius ; par exemple un calcul montrerait qu'un écart $F_C$ - $F_{Co}$ égal à 25 % de $F_C$ est obtenu pour une MRTd de 5°C, sans influer sur la résolution de l'image obtenue à partir des paysages généralement observés. Une valeur avantageuse de $F_{Co}$ se situe donc à approximativement 0,75 $F_C$.

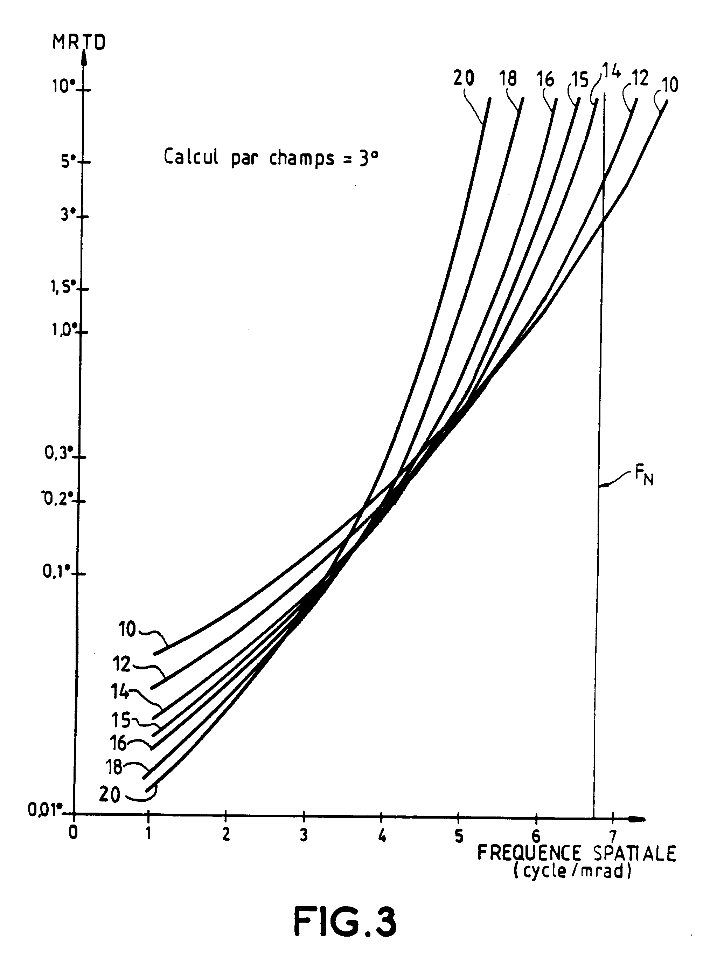

La figure 3 montre les courbes de MRTd 20, 18, 16, 15, 14, 12 et 10 pour différentes dimensions de zones détectrices élémentaires (respectivement pour 20, 18, 16, 15, 14, 12 et 10 μm), le pas d'échantillonnage étant constant et égal à 9 μm. Pour une MRTd supérieure ou égale à 0,2-0,3°, correspondant au seuil de sensibilité différentielle des différentes zones détectrices, il apparaît que la fréquence spatiale, et donc la résolution, augmente sensiblement lorsque la longueur du côté des zones de détection diminue de 20 à 10 μm.

Sur la même représentation graphique, figure également une ligne verticale $F_N$ qui représente la position de la fréquence spatiale de Nyquist un échantillonnage du type TV numérique (702 échantillons pour un champ d'observation de 3°). La fréquence de Nyquist situe la fréquence spatiale, correspondant au pas d'échantillonnage, au-delà de laquelle l'échantillonnage ne permet pas la restitution complète de l'information. Les courbes présentées montrent que, pour un pas d'échantillonnage constant de 9 μm, la fréquence de Nyquist limite l'utilisation de zones détectrices de côté de plus en plus petit à des valeurs de MRTd bornées par des valeurs de plus en plus basses, allant jusqu'à 3°C pour un côté de zone détectrice de 10 μm, mais toujours supérieures aux différences de température habituellement rencontrées (supérieures à 3°C pour un côté de 10 μm), Avec des zones de 15 μm de côté, la fréquence de Nyquist n'est de toute façon pas atteinte pour des MRTd de l'ordre de 10 °C.

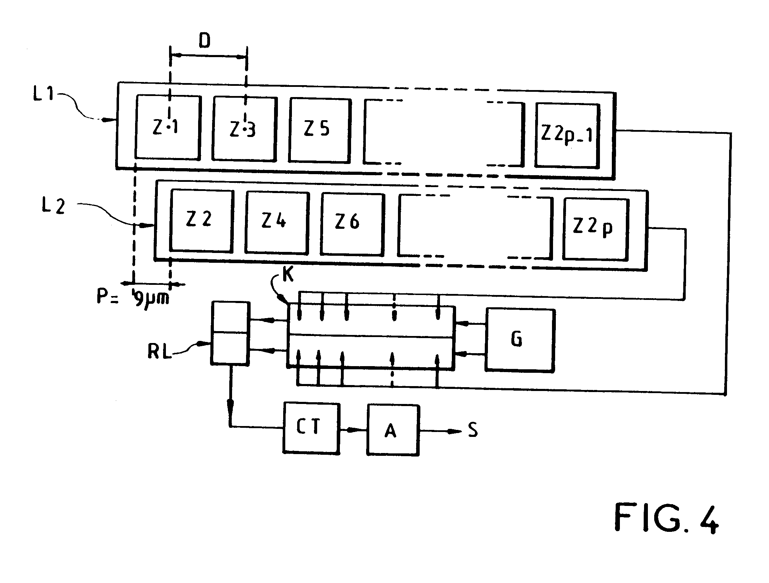

Un exemple de détecteur pseudo-linéaire selon l'invention est présenté en référence à la figure 4, correspondant à une géométrie carrée des zones détectrices élémentaires ayant, par exemple, 15 μm de côté. Les zones détectrices élémentaires ont la même dimension (15 μm) selon la direction horizontale du détecteur avec un pas d'échantillonnage P égal à 9 μm.

Dans la version représentée sur la figure 4, les zones détectrices Z1, Z3, Z5, ..., Z2p-1, et Z2, Z4, Z6, ..., Z2p sont alignées sur 2 lignes, respectivement L1 et L2, décalées d'une distance égale au pas d'échantillonnage de 9 μm. La distance D entre les centres de deux zones consécutives d'une même ligne, c'est-à-dire le pas du réseau de zones en ligne, ou pas spatial, est égale à 2 x 9 μm, soit deux fois le pas d'échantillonnage P. Les zones détectrices sont associées aux entrées d'un circuit de transfert de charges K à deux rangées, une pour chaque ligne de zones détectrices : les charges provenant de la ligne L1 sont retardées par rapport à celles de la ligne L2 grâce à des temps d'intégration différents commandés par un générateur d'horloges G, les charges sont alors multiplexées dans le circuit K puis lues dans un registre de lecture RL ; après conversion dans un convertisseur charges-tension CT relié au registre RL et amplification à travers un amplificateur A, un signal de sortie série S est obtenu.

La synchronisation effectuée grâce au circuit Q permet de former une ligne d'image de télévision à partir d'un recalage dans le temps des signaux provenant respectivement des zones Z1, Z2, Z4, ...Z2p-1, Z2p dont les centres sont distants de la valeur du pas d'échantillonnage (9 μm) définie selon la direction des lignes L1 et L2. Si le nombre d'échantillons est de 702, la longueur du détecteur est de 702 x 0,009 = 6,358 μm.

L'invention n'est pas limitée aux modes de réalisation décrits et représentés : en particulier, le détecteur selon l'invention peut être réalisé avec un nombre Q de lignes respectivement décalées latéralement de 1 x 9 μm, 2 x 9 = 18 μm, ..., (Q-1) x 9 μm par rapport à la première ligne de manière à conserver un pas d'échantillonnage de 9 μm, le pas D du réseau de zones élémentaires en ligne étant tel que D = P x Q. D'autre part, la forme des zones détectrices élémentaires n'est pas limitée à un carré mais peut être de forme quelconque (par exemple rectangulaire, ronde, etc... ) avec une dimension moyenne selon la direction horizontale (H) de valeur égale à c.

## Revendications

**1** - Procédé de formation d'image infrarouge de haute résolution à l'aide d'une caméra thermique suivant lequel une image de la scène observée est formée sur un détecteur infrarouge de type pseudo-linéaire composé de zones détectrices élémentaires disposées sur quelques lignes au plus selon une direction horizontale (H), le détecteur ayant une hauteur très inférieure à celle de l'image formée et une largeur de l'ordre de grandeur de celle de l'image formée, et est balayée selon une direction verticale (V) pour fournir un signal d'information d'image à partir des signaux provenant des zones détectrices élémentaires à une fréquence d'échantillonnage Fe, le détecteur ayant une Fonction de Transfert de Modulation (FTM) à fréquence de coupure $F_C$, le procédé étant caractérisé en ce que la fréquence d'échantillonnage Fe est une fréquence inférieure au double de la fréquence de coupure $F_C$ et supérieure au double d'une fréquence de coupure seuil $F_{Co}$.

**2** - Caméra thermique à balayage monodirectionnel de mise en oeuvre du procédé selon la revendication 1 comportant un système optique afocal d'entrée (1) pour collimater un faisceau d'entrée (6) provenant d'une scène à observer, un miroir de balayage (2) entraîné par un moteur M pour faire défiler ligne par ligne une image de la scène observée projetée par l'intermédiaire d'un objectif (3) sur un détecteur (4), de type pseudo-linéaire à circuit CCD, comprenant des zones détectrices élémentaires de côté c selon la direction horizontale (H) organisées en Q lignes avec un pas spatial en ligne D, un circuit de traitement (9) pour fournir un signal vidéo (SV) à partir du signal (S) issu des signaux provenant des détecteur (4) à une fréquence d'échantillonnage Fe correspondant à un pas d'échantillonnage P=1/Fe, la caméra thermique étant caractérisée en ce que les Q lignes sont décalées d'une distance égale au pas d'échantillonnage P, en ce que la valeur du pas spatial en ligne des zones détectrices élémentaires D est égale au produit du pas d'échantillonnage P par le nombre de lignes Q, et en ce que le pas d'échantillonnage P a une valeur comprise entre la moitié et les trois quarts de la valeur du côté c.

3 - Caméra thermique selon la revendication 2, caractérisée en ce que le détecteur (4) a une largeur globale de n'ordre de 6 mm et 702 zones détectrices élémentaires disposées sur deux lignes (L1, L2), en ce que le pas d'échantillonnage P est sensiblement égal à 9 μm et ne pas spatial en ligne est sensiblement égal à 18 μm, les lignes (L1, L2) étant décalées de 9 μm, en ce que ne côté c des zones détectrices élémentaires est de l'ordre de 15 μm, et en ce que les zones élémentaires fournissent 702 signaux à un circuit de transfert de charges (K) piloté par un générateur d'horloges (G) afin d'obtenir, après passage par un registre de lecture (RL) couplé à un amplificateur (A) à travers un convertisseur charges/tension (CT), un signal de sortie (S) de formation d'image ligne par ligne à une fréquence de 13, 5 MHz.

4 - Caméra thermique selon n'une des revendications 2 et 3, comportant un circuit à retard (7) et un inverseur (8) afin de resynchroniser et de recombiner les signaux provenant de circuits de transfert (5) et (6) associés au détecteur (4) afin de fournir un signal (S), un circuit de traitement (9) pour fournir un signal vidéo (SV) à partir du signal (S) issu des signaux provenant du détecteur (4), caractérisée en ce qu'une mémoire de lignes (11) de faible capacité est montée entre n'inverseur (8) et le circuit de traitement (9), en ce que cette mémoire (11) est commandée par un signal extérieur représentant un décalage angulaire de la ligne de visée correspondant à une partie du champ et en ce que ce décalage angulaire se traduit par une longueur de ligne correspondante afin de compenser les vibrations angulaires selon la direction horizontale.

5 - Caméra thermique selon la revendication 4, caractérisée en ce que le moteur M a une commande asservie à une valeur de consigne à laquelle est superposée une tension externe de compensation des vibrations angulaires selon la direction de balayage verticale.

FIG.1

EP 0 511 896 A1

FIG.2

EP 0 511 896 A1

FIG.3

FIG. 4

EP 0 511 896 A1

Office européen
des brevets

**RAPPORT DE RECHERCHE EUROPEENNE**

Numero de la demande

EP    92 40 1114

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | GB-A-2 191 059 (TELECOMMUNICATIONS READIOELECTRIQUES ET TELEPHONIQUES T.R.T.)<br>* page 1, ligne 5 - ligne 50 *<br>* page 1, ligne 96 - ligne 117 *<br>* page 2, ligne 11 - ligne 26 *<br>* page 2, ligne 72 - ligne 80 *<br>--- | 1-3 | H04N3/15<br>H04N5/33 |
| D,A | GB-A-2 152 328 (ELTRO GMBH GESELLSCHAFT FÜR STRAHLUNGSTECHNIK)<br>* page 1, ligne 3 - ligne 59 *<br>* page 1, ligne 118 - page 3, ligne 61 *<br>--- | 1-3 | |
| A | IEEE TRANSACTIONS ON ELECTRON DEVICES<br>vol. 32, no. 8, Août 1985, NEW-YORK, USA<br>pages 1541 - 1545;<br>YUZUKI ET AL.: 'A 5732-Element Linear CCD Image Sensor'<br>* page 1541, colonne de droite, ligne 5 - page 1542, colonne de gauche, ligne 16 *<br>* page 1543, colonne de gauche, ligne 9 - ligne 11 *<br>--- | 1-3 | |
| A | US-A-4 009 388 (SEACHMAN, NED J.)<br>* colonne 1, ligne 6 - ligne 34 *<br>* colonne 2, ligne 48 - colonne 3, ligne 41 *<br>--- | 1-3 | DOMAINES TECHNIQUES RECHERCHES (Int. Cl.5)<br><br>H04N |
| A | US-A-4 204 230 (SPRAGUE)<br>* colonne 1, ligne 44 - colonne 2, ligne 28 *<br>* colonne 2, ligne 57 - colonne 4, ligne 2 *<br>--- | 1,2 | |
| A | US-A-4 335 400 (CHOW ET AL.)<br>* colonne 1, ligne 10 - ligne 55 *<br>----- | 1 | |

Le présent rapport a été établi pour toutes les revendications

| Lieu de la recherche | Date d'achèvement de la recherche | Examinateur |
|---|---|---|
| LA HAYE | 28 JUILLET 1992 | DE DIEULEVEULT A.J. |